# FASCICULE DE BREVET EUROPEEN

(11) **EP 2 900 509 B1**
(45) Date de publication et mention de la délivrance du brevet: **14.09.2016**
(21) Numéro de dépôt: 13774762.2
(22) Date de dépôt: 19.09.2013
(51) Int. Cl.: B60K 13/04, B60R 3/00

(54) **IMPLANTATION DE RESERVOIR D'UREE DANS UN VEHICULE UTILITAIRE A MOTEUR DIESEL ET VEHICULE CORRESPONDANT**
INSTALLATION EINES HARNSTOFFTANKS IN EINEM NUTZFAHRZEUG MIT EINEM DIESELMOTOR UND ENTSPRECHENDES FAHRZEUG
INSTALLATION OF A UREA TANK IN A COMMERCIAL VEHICLE HAVING A DIESEL ENGINE AND CORRESPONDING VEHICLE

(30) Priorité: 25.09.2012 FR 1259007
(43) Date de publication de la demande: 05.08.2015
(73) Titulaire: Renault S.A.S., 92100 Boulogne-Billancourt (FR)
(72) Inventeur: LEGUEUX, Gilles, 78650 Beynes (FR)
(86) Numéro de dépôt international: PCT/FR2013/052164
(87) Numéro de publication internationale: WO 2014/049237

(56) Documents cités:
- EP-A1- 2 431 536
- EP-A2- 1 659 051
- US-A1- 2009 145 903

## Description

La présente invention concerne une implantation de pipe de réservoir d'urée dans un véhicule utilitaire à moteur diesel. Le document EP 1659 051 décrit un véhicule utilitaire ayant un marchepied d'accès et un réservoir d'urée ayant sa pipe de remplissage qui débouche dans une paroi frontale du marche pied.

Le document FR 2936982 fait connaître les avantages d'une injection d'urée dans la ligne d'échappement d'un véhicule à moteur diesel, dans le but de réduire les émissions nocives. Par ailleurs, le document US 2009/0188923 fait connaître un type de réservoir à urée implanté dans un véhicule automobile. La généralisation prévue de ce dispositif pose des problèmes aux constructeurs automobiles afin d'implanter le réservoir et de prévoir sa pipe de remplissage de la manière la plus adéquate possible. Tel est le problème que l'invention vise à résoudre, dans le cadre d'un véhicule utilitaire.

L'invention atteint son but grâce à une implantation de pipe de réservoir dans un véhicule utilitaire à moteur diesel, du type comprenant une structure inférieure de véhicule définissant un plancher de véhicule et, latéralement, un marchepied d'accès à un siège avant ou à l'espace de chargement du véhicule, la structure inférieure supportant sous le plancher un réservoir de gazole muni d'une pipe de remplissage débouchant latéralement du véhicule, en arrière ou en avant du marchepied, le véhicule comportant en outre un réservoir d'urée muni d'une pipe de remplissage, caractérisé en ce que le réservoir d'urée est logé au voisinage immédiat du réservoir de gazole, et en ce que la pipe de remplissage débouche dans une paroi frontale du marchepied. Très avantageusement, la pipe de remplissage débouche dans une paroi frontale arrière du marchepied d'accès à un siège avant du véhicule.

De cette manière, l'accès à la pipe de remplissage est facile pour l'utilisateur et sécurisé en même temps que la voiture puisque cette paroi frontale de marchepied est couverte par la porte avant fermée du véhicule en utilisation normale.

Avantageusement, la pipe de remplissage débouche au niveau d'un logement formé dans la paroi frontale du marchepied.

Avantageusement, le logement est fermé par une trappe amovible qui peut être ouverte par l'utilisateur.

L'invention concerne aussi un véhicule automobile, comprenant une pipe de réservoir, une structure inférieure de véhicule définissant un plancher de véhicule et, latéralement, un marchepied d'accès à un siège avant ou à l'espace de chargement du véhicule, la structure inférieure supportant sous le plancher un réservoir de gazole muni d'une pipe de remplissage débouchant latéralement du véhicule, en arrière ou en avant du marchepied, le véhicule comportant en outre un réservoir d'urée muni d'une pipe de remplissage, caractérisé en ce que le réservoir d'urée est logé au voisinage immédiat du réservoir de gazole, et en ce que la pipe de remplissage débouche dans une paroi frontale du marchepied. Avantageusement, le véhicule comprend une porte, notamment une porte avant, apte à recouvrir la paroi frontale de marchepied lorsqu'elle est en position fermée, de façon à interdire l'accès à la pipe de remplissage dans cette position.

D'autres caractéristiques et avantages de l'invention ressortiront de la description suivante d'un exemple de réalisation. Il sera fait référence aux dessins annexés sur lesquels :
- la figure 1 est une vue en perspective d'un détail du véhicule de l'invention, dans la région d'implantation de la pipe de remplissage du réservoir d'urée, au niveau du marchepied d'accès au siège avant.
- la figure 2 est une vue analogue à la figure 1, sous un angle légèrement différente, la trappe d'accès à la pipe de remplissage étant enlevée.

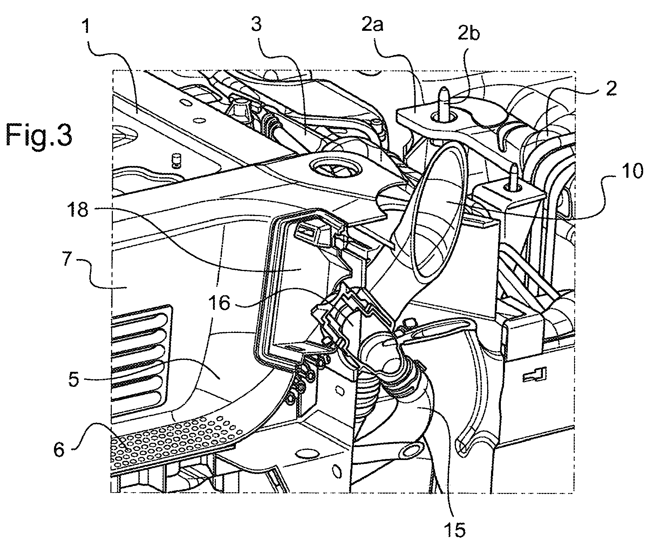

- la figure 3 est une vue semblable, avec coupe dans un plan longitudinal vertical passant par la pipe de remplissage.

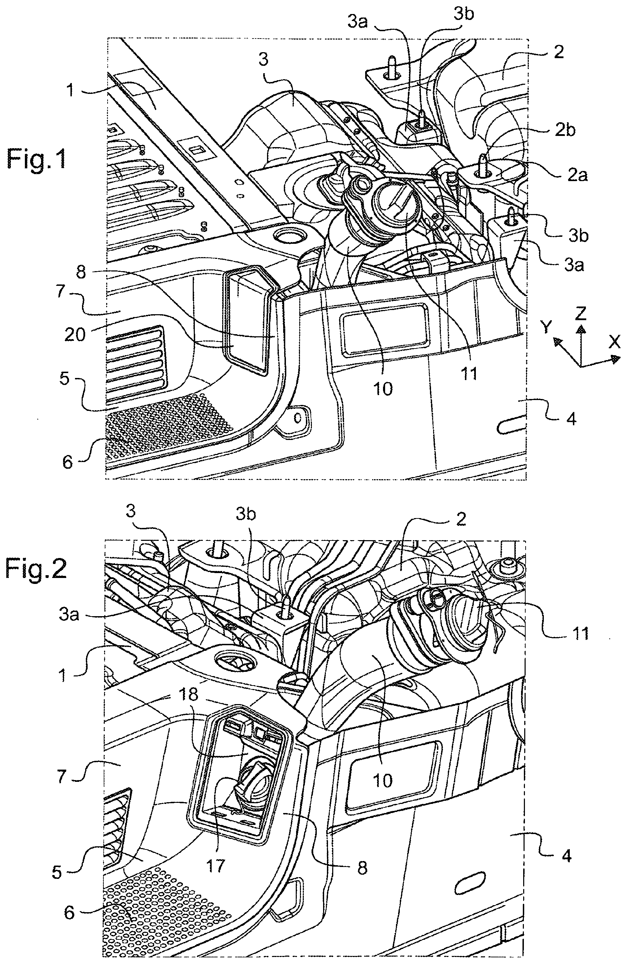

La description se réfère à l'orientation du trièdre de référence XYZ (figure 1) :
X = sens longitudinal du véhicule, dirigé vers l'arrière.
Y = transversal au véhicule, dirigé vers la droite du véhicule
Z = vertical, dirigé vers le haut.

Le véhicule industriel, dont le dessin ne montre qu'une petite partie, comporte un châssis avec une structure inférieure sur laquelle repose un plancher horizontal 1. Les figures ne montrent que la partie avant du plancher 1, au niveau des sièges avant (non représentés) du véhicule. Le plancher se poursuit à l'arrière mais n'a pas été représenté pour permettre d'apercevoir le réservoir à gazole 2 qui est installé sous le plancher 1 et est fixé à la structure (une traverse horizontale par exemple) par des moyens connus comme par exemple des pattes 2a et des vis 2b (une seule patte et une seule vis sont représentées). Le côté du véhicule est bordé par une tôle de carrosserie latérale 4 fixée au châssis, dont seule une portion est représentée sur les figures. Le seuil de l'ouverture latérale d'accès au siège avant comporte une garniture de marchepied 5 fixée au châssis et une marche antidérapante 6, une contremarche verticale 7, et des parois frontales avant (non visible) et arrière 8 s'élevant de façon sensiblement verticale à l'avant et à l'arrière de la marche 6. Le réservoir à gazole 2 débouche sur l'extérieur par une pipe de remplissage 10 munie d'un bouchon 11, au niveau d'une trappe prévue dans la carrosserie latérale 4, typiquement située sur le pied milieu séparant une porte avant d'une porte latérale arrière. La trappe est munie d'un dispositif de fermeture de sécurité. Tous ces éléments sont connus en soi et n'ont pas besoin d'être décrits davantage.

Selon l'implantation typique de l'invention, on a prévu un réservoir à urée 3 placé sous le plancher 1 à côté du réservoir à gazole 2 dans la direction longitudinale Y du véhicule. Il est fixé à la structure par des moyens également connus comme par exemple des pattes 3a et des vis 3b. Le réservoir à urée 3 peut être rempli grâce à une pipe de remplissage 15 dont l'ouverture supérieure 16 est fermable par un bouchon 17 et se situe dans un logement 18 formé dans la paroi verticale frontale arrière 8. Le logement 18 est accessible par une trappe 20 amovible (figure 1). La trappe n'a pas besoin d'être sécurisée, car elle est située dans le marchepied 5 lequel est couvert par la porte latérale du véhicule quand celle-ci est fermée. Cette porte est typiquement une porte avant. La pipe 15 relie par une conduite non représentée l'ouverture 16 au réservoir d'urée 3.

L'utilisateur a donc un accès facile à la pipe de remplissage à urée située dans l'habitacle ; il retire la trappe 20, dévisse le bouchon 17 et procède au remplissage avec une bouteille spécifique qui se visse et qui empêche les débordements. Cette opération est à réaliser tous les 30 000 kilomètres environ.

Dans un autre mode de réalisation non illustré, la pipe de remplissage débouche dans une paroi frontale avant d'un marchepied correspondant à une porte latérale arrière du véhicule, par exemple une porte latérale coulissante. En position fermée, la porte latérale coulissante recouvre également la paroi frontale avant, interdisant l'accès à la pipe de remplissage.

## Revendications

1. Véhicule utilitaire à moteur diesel, du type comprenant une structure inférieure de véhicule définissant un plancher (1) de véhicule et, latéralement, un marchepied (5) d'accès à un siège avant ou à l'espace de chargement du véhicule, la structure inférieure supportant sous le plancher (1) un réservoir de gazole (2) muni d'une pipe de remplissage (10) débouchant latéralement du véhicule, en arrière ou en avant du marchepied (5), le véhicule comportant en outre un réservoir d'urée (3) muni d'une pipe de remplissage (15), **caractérisé en ce que** le réservoir d'urée (3) est logé au voisinage immédiat du réservoir de gazole (2), et **en ce que** sa pipe de remplissage (15) débouche dans une paroi frontale (8) du marchepied (5).

2. Véhicule selon la revendication 1, **caractérisée en ce que** la pipe de remplissage (15) débouche dans une paroi frontale arrière (8) du marchepied (5) d'accès à un siège avant du véhicule.

3. Véhicule selon la revendication 1 ou 2, **caractérisée en ce que** la pipe de remplissage (15) du réservoir d'urée débouche au niveau d'un logement (17) formé dans la paroi frontale (8) du marchepied (5).

4. Véhicule selon la revendication 3, **caractérisée en ce que** le logement (17) est fermé par une trappe (20) qui peut être ouverte par l'utilisateur.

5. Véhicule selon la revendication 1, **caractérisé en ce qu'**il comprend une porte, notamment une porte avant, apte à recouvrir la paroi frontale (8) de marchepied lorsqu'elle est en position fermée, de façon à interdire l'accès à la pipe de remplissage (15) dans cette position.

## Patentansprüche

1. Nutzfahrzeug mit Dieselmotor, vom Typ aufweisend eine Fahrzeugunterstruktur, die einen Boden (1) eines Fahrzeugs und seitlich ein Trittbrett (5) für den Zugang zu einem Vordersitz oder zum Laderaum des Fahrzeugs definiert, wobei die Unterstruktur unter dem Boden (1) einen Dieseltank (2) trägt, der mit einem Einfüllstutzen (10), der seitlich am Fahrzeug, hinter oder vor dem Trittbrett (5), ausmündet, versehen ist, wobei das Fahrzeug darüber hinaus einen Harnstofftank (3), der mit einem Einfüllstutzen (15) versehen ist, aufweist, **dadurch gekennzeichnet, dass** der Harnstofftank (3) in der unmittelbaren Nähe des Dieseltanks (2) untergebracht ist, und dass sein Einfüllstutzen (15) in einer frontalen Wand (8) des Trittbretts (5) ausmündet.

2. Fahrzeug nach Anspruch 1, **dadurch gekennzeichnet, dass** der Einfüllstutzen (15) in einer hinteren frontalen Wand (8) des Trittbretts (5) für den Zugang zu einem Vordersitz des Fahrzeugs ausmündet.

3. Fahrzeug nach Anspruch 1 oder 2, **dadurch gekennzeichnet, dass** der Einfüllstutzen (15) des Harnstofftanks in Höhe einer Aufnahme (17), die in der frontalen Wand (8) des Trittbretts (5) ausgebildet ist, ausmündet.

4. Fahrzeug nach Anspruch 3, **dadurch gekennzeichnet, dass** die Aufnahme (17) durch eine Klappe (20) geschlossen wird, die vom Nutzer geöffnet werden kann.

5. Fahrzeug nach Anspruch 1, **dadurch gekennzeichnet, dass** es eine Tür, insbesondere eine Vordertür, umfasst, die in der Lage ist, die frontale Wand (8) eines Trittbretts zu verdecken, wenn sie sich in geschlossener Position befindet, sodass der Zugang zum Einfüllstutzen (15) in dieser Position verhindert wird.

## Claims

1. Commercial vehicle with a diesel engine, of the type comprising a lower vehicle structure defining a vehicle floor (1) and, to the side, a running board (5) providing access to a front seat or to the cargo space of the vehicle, the lower structure supporting beneath the floor (1) a diesel oil tank (2) fitted with a filler pipe (10) opening out at the side of the vehicle, at the rear or at the front of the running board (5), the vehicle moreover comprising a urea tank (3) fitted with a filler pipe (15), **characterized in that** the urea tank (3) is housed in the immediate vicinity of the diesel oil tank (2) and **in that** its filler pipe (15) opens out in a front wall (8) of the running board (5).

2. Vehicle according to Claim 1, **characterized in that** the filler pipe (15) opens out in a front wall at the rear (8) of the running board (5) providing access to the front seat of the vehicle.

3. Vehicle according to Claim 1 or 2, **characterized in that** the filler pipe (15) of the urea tank opens out at the level of the housing (17) formed in the front wall (8) of the running board (5).

4. Vehicle according to Claim 3, **characterized in that** the housing (17) is closed by a panel (20) that can be opened by the user.

5. Vehicle according to Claim 1, **characterized in that** it comprises a door, particularly a front door, capable of covering the front wall (8) of the running board when it is in the closed position, so as to prevent access to the filler pipe (15) in this position.
